# EUROPEAN PATENT SPECIFICATION

(11) **EP 3 759 333 B1**
(45) Date of publication and mention of the grant of the patent: **11.05.2022**
(21) Application number: 19707802.5
(22) Date of filing: 28.02.2019
(51) Int. Cl.: F02D 19/06, F02M 21/02, F02M 43/02, F02M 59/10, F16J 15/00, F15B 15/14

(54) **FUEL SUPPLY SYSTEM AND ASSEMBLY FOR INJECTING LIQUEFIED VAPOUR UNDER HIGH PRESSURE INTO A COMBUSTION CHAMBER**
KRAFTSTOFFZUFUHRSYSTEM UND ANORDNUNG ZUM EINSPRITZEN VON VERFLÜSSIGTEM DAMPF UNTER HOHEM DRUCK IN EINE BRENNKAMMER
SYSTÈME D'ALIMENTATION EN COMBUSTIBLE ET ENSEMBLE D'INJECTION DE VAPEUR LIQUÉFIÉE SOUS HAUTE PRESSION DANS UNE CHAMBRE DE COMBUSTION

(30) Priority: 28.02.2018 NL 2020508
(43) Date of publication of application: 06.01.2021
(73) Proprietor: Vialle Group B.V., 5626 EA Eindhoven (NL)
(72) Inventor: JAASMA, Servatius Alfons Maria, 5627 TE Eindhoven (NL)
(74) Representative: Brantsandpatents bvba
(86) International application number: PCT/EP2019/055049
(87) International publication number: WO 2019/166580

(56) References cited:
- EP-A1- 2 722 567
- EP-A2- 2 657 541
- EP-B1- 2 722 567
- WO-A1-2009/110792
- WO-A1-2011/010342
- WO-A1-2017/174680
- DE-A1-102007 037 214
- JP-A- H05 332 217
- JP-A- S59 155 533
- US-A1- 2007 125 338
- US-A1- 2008 272 554
- US-A1- 2012 326 396

## Description

### TECHNICAL FIELD

The present invention relates to the field of fuel supply systems for converting a single fuel engine, more specifically a gasoline direct injection (GDI) engine, to a dual fuel supply system, whereby a liquefied vapour is injected under high pressure into a combustion chamber.

### INTRODUCTION

Low carbon alternative fuels such as compressed natural gas (CNG, methane) or liquefied vapour gas (LPG, mixture of propane and butane) have been popular for many years due to their low cost per litre. In recent years the comparably low carbon content of these fuels has been a great market promotor since their application results in an immediate greenhouse gas reduction of about 40% for CNG and about 20 percent for LPG. For these reasons, it is clear that there is a strong market demand for conversion kits for converting i.e. diesel or gasoline cars to cars running on gaseous carbon fuels. This implies that also the most recent GDI type vehicles are converted to alternative fuel systems.

Up to the introduction of GDI, the installation of an alternative fuel kit into a vehicle comprised the straightforward addition of a complete parallel fuel system onto the vehicle. Basically, when changing from petrol fuel to LPG fuel, the control unit of petrol fuel was shut down and all fuelling related functions were now executed by the LPG fuel control unit. With the introduction of GDI this neat and simple strategy could no longer be upheld for a number of reasons. Firstly, the LPG fuel system must receive input signals from the petrol fuel control unit in order to calculate the correct amount of LPG fuel to be injected. Given the very confined space inside the combustion chamber it was not feasible to add specific alternative fuel injectors. If indirect injection for the LPG fuel is to be employed it implies that the LPG control unit must try to convert the GDI injector signal into an indirect injector signal (MPI). If direct injection of the LPG fuel via the original petrol injectors is sought after, the original GDI injector signal still has to be manipulated to correct for differences in specific density and heating values. Both these factors introduce a great system sensitivity related to the on-board diagnostics (OBD) systems performance of the complete vehicle.

Next, the state of the art conversion systems available for modern GDI vehicles fall into two categories. The first category deactivates the GDI injectors and adds indirect (MPI) vapour phase injectors which are mounted onto the intake manifold. This category of conversion systems typically uses a conventional evaporator to vaporize the liquid LPG as stored inside the LPG fuel tank. The LPG is evaporated to a pressure roughly 1 bar over the ambient pressure. Large orifice vapour injectors are then placed onto the engine intake manifold. An LPG control unit is supplied which has the function of intercepting the original signals being sent to the GDI injectors and subsequently manipulating these signals so these can be redirected to the now added LPG vapour injectors. The drawbacks attached to this conversion route are mainly resulting from the required signal manipulations, giving rise to serious OBD issues. Furthermore, the fact that a direct injection fuelling system is basically replaced with an indirect (MPI) fuelling system implies that many of the advantages of the direct injection concept are nullified. Furthermore, this has negative implications for petrol consumption and the operation of the petrol injector. The second category of conversion systems seek to utilize the high-pressure parts already available on the original GDI engine. Such systems whereby the LPG is not evaporated but is further pressurized inside the LPG fuel tank and then transported to the intake port of the existing GDI high-pressure pump are known in the market. Part of the conversion system consists of a hydraulic unit (FSU) capable of switching the inlet port of the GDI pump to connect with either the low-pressure gasoline feed line or with the low-to-medium pressure LPG feed line. This category of systems upholds the direct injection concept but has been shown to also be prone to OBD related errors. This is again mainly due to the quite extensive signal manipulation required. Also, the change-over from the petrol fuel to the LPG fuel is, by nature, a complicated process. A more recent development described in WO 2017/174680 relates to a system for exchanging different fuels which can be used to operate a combustion engine. Said system comprises a fuel exchange unit, a controller and an exchange-return line. The fuel exchange unit is designed to supply a first fuel, when the combustion engine is switched off, under pressure to the injection system, in order to exchange a second fuel with the first fuel in the injection system. The system further comprises a medium converter having a moveable element. Said medium converter is driven by the fluid through a drive unit, in which the fluid can be supplied to the medium converter via a first supply line under differing pressures, and is also designed to convey the fuel by means of a pump action.

A drawback of all conversion systems falling into the second category is their sensitivity to heat in general. The liquefied vapour must be kept in a super-critical state in order to avoid unwanted evaporation anywhere in the fuel system. This condition cannot be met once the engine has stopped and engine-bay heat is soaking into the fuel system.

Another disadvantage of the second category of conversion systems is related to the GDI high-pressure pump itself. This highly sensitive component has difficulties in handling liquefied vapour. During operation the lubrication of the high-pressure pump plunger and seals is failing as a result of the inferior lubricating properties of liquefied vapour.

Yet another drawback related to the conversion systems falling into the second category is also related to the high-pressure pump. This component will typically show unwanted leakage behaviour both when the engine is running and continuing after the engine has stopped. Since the pump is not evacuated of liquefied vapour fuel when the engine is stopped, the already failing seals in the pump will continue to leak liquefied vapour fuel into the engine crankcase for many hours, following each engine stop.

A next drawback of such system is found in the intended or unintended mixing which occurs between the two fuels. This phenomenon originates mainly from the fuel change-over events which from time to time will occur at driver-request or otherwise. Since the high-pressure system is shared between the two fuels it follows that the fuel inside the high-pressure system must then be replaced by flushing the petrol fuel by means of the liquefied vapour fuel or vice versa. In practice this means that at each change-over event a certain amount of Petrol is flushed into the liquefied vapour tank.

Finally, a serious drawback of conversion systems falling into the second category, is injector tip leakage which is creating a cranking problem and a crankcase flooding problem originating from the fact that in these systems the liquefied vapour fuel pressure will remain present for many hours after the engine has been shut down.

The present invention aims to solve or at least significantly improve upon the different shortcomings described above.

### SUMMARY OF THE INVENTION

The current invention provides in a solution for at least one of the above mentioned problems by providing a fuel supply system and assembly for injecting liquefied vapour under high pressure into a combustion chamber.

In a first aspect, the present invention provides a fuel supply system according to claim 1 for injecting a liquefied vapour, such as liquefied petroleum gas or dimethyl ether fuel, under high pressure into a combustion chamber (8) of a combustion engine, comprising:
(i) a first fuel supply tank (1) for a petrol fuel equipped with a supply pump;
(ii) a second fuel supply tank (2) for liquefied vapour equipped with a supply pump;
(iii) a petrol fuel high-pressure pump (7) downstream of the first fuel supply tank (1);
(iv) a liquefied vapour high-pressure pump (5) downstream of the second fuel supply tank (3);
(v) a fuel selector switch (3) between said petrol fuel high-pressure pump (7) and said liquefied vapour high-pressure pump (5) for operating the fuel supply system in a petrol feeding state (P) or in a liquefied vapour feeding state (G);
(vi) a high-pressure rail (4) downstream of said petrol fuel high-pressure pump (7) and downstream of said liquefied vapour high-pressure pump (5), with multiple injectors (I1, I2, I3, I4) for direct injection of fuel into the combustion chambers (8);
wherein said liquefied vapour high-pressure pump (5) is arranged for receiving high-pressurized petrol from said petrol fuel high-pressure pump (7) via said fuel selector switch (3) in one or more petrol chambers (A, B), and for receiving liquefied vapour from said second fuel supply tank (2) in one or more liquefied vapour chambers (C, D); and
wherein said liquefied vapour high-pressure pump (5) further comprises a piston for transmitting the pressure of petrol fuel in said petrol chambers (A, B) to the liquefied vapour fuel in said liquefied vapour chambers (C, D).

One of the advantages of the fuel supply system according to the invention is that the adaptation kit can easily be built in with a pre-existing fuel, i.e. petrol fuel, supply system. Moreover, the present solution provides a system whereby the energy input of the petrol fuel high-pressure pump (7) can advantageously be used for increasing the pressure in the liquefied vapour fuel circuit leading up to the high-pressure rail.

In a second aspect, the present invention provides an assembly according to claim 12 mountable between (i) a first fuel supply tank (1) for a petrol fuel equipped with a supply pump, (iii) a petrol fuel high-pressure pump (7) downstream of the first fuel supply tank (1), and (vi) a high-pressure rail (4) downstream of said petrol fuel high-pressure pump (7), with multiple injectors (I1, I2, I3, I4) for direct injection of fuel into the combustion chambers (8), for injecting a liquefied vapour, such as liquefied petroleum gas or dimethyl ether fuel, under high pressure into a combustion chamber (8) of a combustion engine, said assembly comprising:
(ii) a second fuel supply tank (2) for liquefied vapour equipped with a supply pump;
(iv) a liquefied vapour high-pressure pump (5) connectable downstream of the second fuel supply tank (3) and upstream of the high-pressure rail (4);
(v) a fuel selector switch (3) connectable between said petrol fuel high-pressure pump (7) and said liquefied vapour high-pressure pump (5) for operating the fuel supply system in a petrol feeding state (P) or in a liquefied vapour feeding state (G);
wherein said liquefied vapour high-pressure pump (5) is provided with inlets for receiving high-pressurized petrol from said petrol fuel high-pressure pump (7) via said fuel selector switch (3) in one or more petrol chambers (A, B), and is provided with inlets for receiving liquefied vapour from said second fuel supply tank (2) in one or more liquefied vapour chambers (C, D); and
wherein said liquefied vapour high-pressure pump (5) further comprises a piston for transmitting the pressure of petrol fuel in said petrol chambers (A, B) to the liquefied vapour fuel in said liquefied vapour chambers (C, D).

Such an assembly allows for easy conversion of a pre-existing fuel, i.e. petrol fuel, supply system to a dual fuel supply system.

### DESCRIPTION OF THE FIGURES

By means of further guidance, figures are included to better appreciate the teaching of the present invention. Said figures are intended to assist the description of the invention and are nowhere intended as a limitation of the presently disclosed invention.

The figures and symbols contained therein have the meaning as commonly understood by one of ordinary skill in the art to which this invention belongs.
Figure 1 shows schematically a fuel supply system according to the first aspect of the invention within a GDI engine, whereby electrical connections have been omitted for clarity.
Figure 2 shows a pre-existing fuel, i.e. petrol fuel, supply system comprising a petrol supply tank (1) and a high-pressure pump (7) connected to a high-pressure rail (4) and injectors (I1, I2, I3 and I4) with combustion chambers (8).
Figure 3 shows a multiple-lip seal as used in a fuel supply system according to the first aspect of the invention.
Figure 4 shows a dust seal as preferably used in a fuel supply system according to the first aspect of the invention.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The current invention provides in a solution for at least one of the above mentioned problems by providing a fuel supply system and assembly for injecting liquefied vapour under high pressure into a combustion chamber.

In the first aspect, the present invention provides a fuel supply system according to claim 1 for injecting a liquefied vapour, such as liquefied petroleum gas or dimethyl ether fuel, under high pressure into a combustion chamber (8) of a combustion engine, comprising:
(i) a first fuel supply tank (1) for a petrol fuel equipped with a supply pump;
(ii) a second fuel supply tank (2) for liquefied vapour equipped with a supply pump;
(iii) a petrol fuel high-pressure pump (7) downstream of the first fuel supply tank (1);
(iv) a liquefied vapour high-pressure pump (5) downstream of the second fuel supply tank (3);
(v) a fuel selector switch (3) between said petrol fuel high-pressure pump (7) and said liquefied vapour high-pressure pump (5) for operating the fuel supply system in a petrol feeding state (P) or in a liquefied vapour feeding state (G);
(vi) a high-pressure rail (4) downstream of said petrol fuel high-pressure pump (7) and downstream of said liquefied vapour high-pressure pump (5), with multiple injectors (I1, I2, I3, I4) for direct injection of fuel into the combustion chambers (8);
wherein said liquefied vapour high-pressure pump (5) is arranged for receiving high-pressurized petrol from said petrol fuel high-pressure pump (7) via said fuel selector switch (3) in one or more petrol chambers (A, B), and for receiving liquefied vapour from said second fuel supply tank (2) in one or more liquefied vapour chambers (C, D); and
wherein said liquefied vapour high-pressure pump (5) further comprises a piston for transmitting the pressure of petrol fuel in said petrol chambers (A, B) to the liquefied vapour fuel in said liquefied vapour chambers (C, D).

One of the advantages of the fuel supply system according to the invention is that the adaptation kit can easily be built in with a pre-existing fuel, i.e. petrol fuel, supply system. Moreover, the present solution provides a system whereby the energy input of the petrol fuel high-pressure pump (7) can advantageously be used for increasing the pressure in the liquefied vapour fuel circuit leading up to the high-pressure rail. The invention revolves around using the GDI high-pressure pump (7) for both the petrol (P) and the liquefied vapour (G) driving modes and therefore provides the energy for required pressure increase in both fuels. The fuel processed by the petrol fuel high-pressure pump will at all times be exclusively petrol. The high-pressure energy stored inside the pressurized petrol when it leaves the petrol fuel high-pressure pump outlet port is, according to the present invention, utilized to increase the pressure of the liquefied vapour fuel by means of the media separated liquefied vapour high-pressure pump (5), when the system is operating in the G modus.

Another advantage of the present invention is that the non-petrol use of the gasoline high-pressure pump is avoided, that problems concerning on-board diagnostics issues are avoided by applying a simplified construction and that the unintentional mixing of fuels which takes place in most state of the art conversion systems for GDI vehicles is avoided.

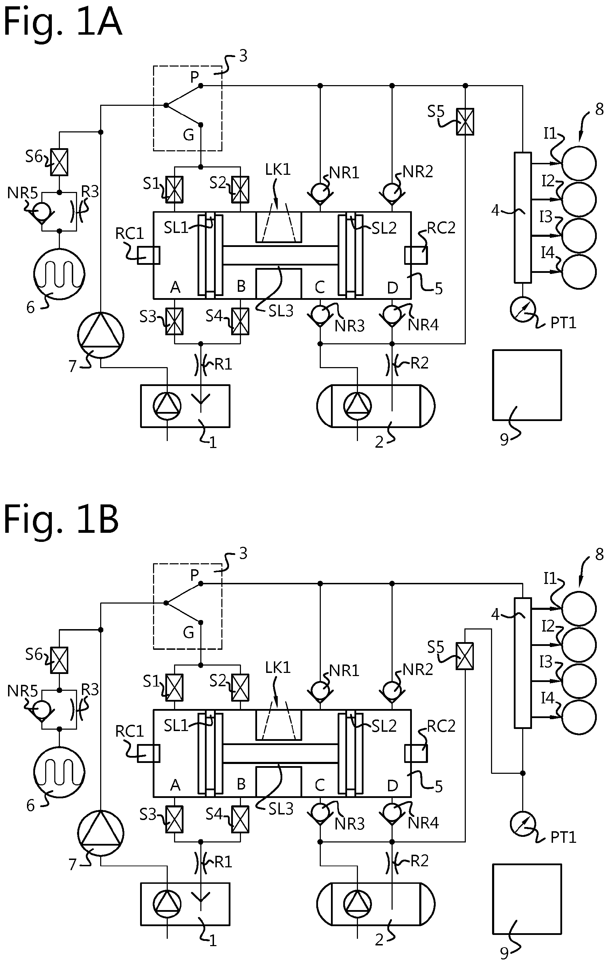

The fuel supply system of the first aspect of the invention is depicted in Figure 1. Figure 1 shows schematically a fuel supply system according to the first aspect of the invention within a GDI engine, whereby electrical connections have been omitted for clarity. Figure 1 further depicts in more detail the first aspect of the invention for pressurizing the liquefied vapour fuel whereby the chambers C and D, the feed and exit lines with non-return valves NR1, NR2, NR3 and NR4 in cooperation with the piston form a double acting piston pump. The piston blade in chamber C-D is dimensioned to conform to the inner dimension of chamber C-D. According to the configuration, liquefied vapour is expelled from chamber D via non-return valve NR2 when the piston moves in the right direction while liquefied vapour is drawn in into chamber C via non-return valve NR3. When the piston moves in the left direction, liquefied vapour is expelled from chamber D via non-return valve NR1 while liquefied vapour is drawn in into chamber D via non-return valve NR4. The piston is actuated by controlling the petrol pressure in chambers A and B through the controlled operation of solenoids S1, S2, S3 and S4. In an alternative and preferred embodiment, said operation is controlled by 3/2-valves (S1, S2, S3 and S4). This allows for better prevention of leakages.

In a preferred embodiment, the present invention provides a fuel supply system according to the first aspect of the invention, wherein said selector switch (3) is comprised of a 3/2 valve. This allows for better prevention of leakages.

The present invention provides a fuel supply system according to the first aspect of the invention, wherein properly designed seals (SL1, SL2 and SL3) are selected to keep petrol fuel and liquefied vapour fuel strictly separated inside the liquefied vapour high-pressure pump (5).

The present invention provides a fuel supply system according to the first aspect of the invention, wherein the piston rod of said piston is provided with a seal (SL3), wherein said seal comprises a multiple-lip seal. In an alternative, multiple seals may be engaged in stead of said multiple-lip seal.

The present invention provides a fuel supply system according to the first aspect of the invention, wherein said multiple-lip seal comprises one or more leakage channels (10, 11, 12).

The present invention provides a fuel supply system according to the first aspect of the invention, wherein at least one leakage channel (10) is arranged for returning petrol to said first fuel supply tank (1).

The present invention provides a fuel supply system according to the first aspect of the invention, wherein at least one leakage channel (12) is arranged for returning liquefied vapour to said second fuel supply tank (2).

The present invention provides a fuel supply system according to the first aspect of the invention, wherein at least one leakage channel (11) is arranged for returning petrol and/or liquefied vapour to a purge canister.

In a preferred embodiment, the present invention provides a fuel supply system according to the first aspect of the invention, further comprising a recirculation pump (13) for recirculating vapour and/or liquefied vapour in said high-pressure rail (4) to a supply line upstream of said high-pressure rail (4), preferably to a liquefied vapour supply line. This is advantageous for allowing a cold-start of the fuel supply system in the mode wherein liquefied vapour is fed to the high-pressure rail (4).

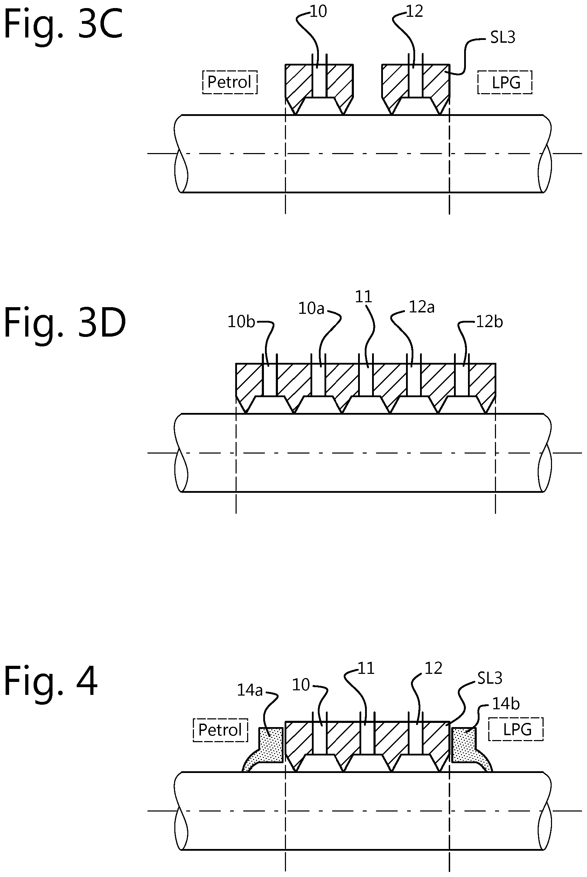

In a preferred embodiment, the present invention provides a fuel supply system according to the first aspect of the invention, wherein a dust seal (14a, 14b) shields said seal (SL3), preferably said multiple-lip seal. This is advantageous for shielding dust and/or metal particles from any one of said leakage channels (10, 11, 12). This embodiment is depicted in Fig. 4.

In a preferred embodiment, the present invention provides a fuel supply system according to the first aspect of the invention, wherein said petrol chambers (A, B) are provided with feed valves (S1, S2) and exit valves (S3, S4), and wherein said feed valves (S1, S2) and said exit valves (S3, S4) are operated by a control unit (9).

In a preferred embodiment, the present invention provides a fuel supply system according to the first aspect of the invention, wherein said liquefied vapour high-pressure pump (5) comprises a sensor (RC2) for determining the position of the piston rod, whereby said sensor (RC2) is configured for communicating a signal to a control unit (9). Preferably, said sensor is a linear sensor for determining the position of the piston rod. Alternatively, said sensor is a Reed contact.

In a preferred embodiment, the present invention provides a fuel supply system according to the first aspect of the invention, wherein said injector rail (4) is provided with a pressure transduce (PT1), whereby said pressure transduce (PT1) is configured for communicating a signal to a control unit (9).

In a preferred embodiment, the present invention provides a fuel supply system according to the first aspect of the invention, further comprising a liquefied vapour return line comprising a valve (S5) for returning liquefied vapour in said injector rail (4) to said second fuel supply tank (2) for liquefied vapour.

In a preferred embodiment, the present invention provides a fuel supply system according to the first aspect of the invention, wherein said high-pressure rail (4) further comprises a return line comprising a valve (S5) for returning liquefied vapour in said injector rail (4) to said second fuel supply tank (2) for liquefied vapour. This embodiment is depicted in Fig. 1B. This allows for flushing the high-pressure rail and/or the liquid fuel (petrol) section of the feed lines. Accordingly, any vaporous fuel present is allowed to return to the liquefied vapour fuel tank. Eventually, this allows for starting the engine in the liquefied vapour fuel mode.

In a preferred embodiment, the present invention provides a fuel supply system according to the first aspect of the invention, wherein said valve (S5) is controlled by a control unit (9) after receiving a signal from a pressure transduce (PT1) in said injector rail (4).

In a preferred embodiment, the present invention provides a fuel supply system according to the first aspect of the invention, further comprising a petrol accumulator (6) between said fuel selector switch (3) and said petrol fuel high-pressure pump (7).

In a preferred embodiment, the present invention provides a fuel supply system according to the first aspect of the invention, wherein said petrol accumulator (6) is provided with a valve (S6) for opening and closing fluid communication to said petrol accumulator (6) and wherein a non-return valve (NR6) is provided between said petrol accumulator (6) and said valve (S6).

In a preferred embodiment, the present invention provides a fuel supply system according to the first aspect of the invention, wherein said non-return valve (NR6) is bypassed by a restrictor (R3).

In a preferred embodiment, the present invention provides a fuel supply system according to the first aspect of the invention, further comprising a petrol return line for returning petrol fuel in said petrol chamber (A, B) via exit valves (S3, S4) to said first fuel supply tank (1) for petrol fuel. Preferably, said petrol return line is equipped with a pressure-reducing valve (R1).

In a preferred embodiment, the present invention provides a fuel supply system according to the first aspect of the invention, further comprising a liquefied vapour return line for returning liquefied vapour fuel in said liquefied vapour chamber (C, D) to said second fuel supply tank (1) for liquefied vapour fuel. Preferably, said liquefied vapour return line is equipped with a pressure-reducing valve (R2).

In a preferred embodiment, the present invention provides a fuel supply system according to the first aspect of the invention, wherein liquefied vapour fuel supply lines for feeding liquefied vapour fuel to said liquefied vapour chamber (C, D) are provided with non-return valves (NR3, NR4).

In a preferred embodiment, the present invention provides a fuel supply system according to the first aspect of the invention, wherein liquefied vapour feed lines between liquefied vapour chamber (C, D) and the high-pressure rail (4) are provided with non-return valves (NR1, NR2).

In the second aspect, the present invention provides an assembly according to claim 12 mountable between (i) a first fuel supply tank (1) for a petrol fuel equipped with a supply pump, (iii) a petrol fuel high-pressure pump (7) downstream of the first fuel supply tank (1), and (vi) a high-pressure rail (4) downstream of said petrol fuel high-pressure pump (7), with multiple injectors (I1, I2, I3, I4) for direct injection of fuel into the combustion chambers (8), for injecting a liquefied vapour, such as liquefied petroleum gas or dimethyl ether fuel, under high pressure into a combustion chamber (8) of a combustion engine, said assembly comprising:
(ii) a second fuel supply tank (2) for liquefied vapour equipped with a supply pump;
(iv) a liquefied vapour high-pressure pump (5) connectable downstream of the second fuel supply tank (3) and upstream of the high-pressure rail (4);
(v) a fuel selector switch (3) connectable between said petrol fuel high-pressure pump (7) and said liquefied vapour high-pressure pump (5) for operating the fuel supply system in a petrol feeding state (P) or in a liquefied vapour feeding state (G);
wherein said liquefied vapour high-pressure pump (5) is provided with inlets for receiving high-pressurized petrol from said petrol fuel high-pressure pump (7) via said fuel selector switch (3) in one or more petrol chambers (A, B), and is provided with inlets for receiving liquefied vapour from said second fuel supply tank (2) in one or more liquefied vapour chambers (C, D); and
wherein said liquefied vapour high-pressure pump (5) further comprises a piston for transmitting the pressure of petrol fuel in said petrol chambers (A, B) to the liquefied vapour fuel in said liquefied vapour chambers (C, D).

The present invention provides an assembly according to the second aspect of the invention, wherein the piston rod of said piston is provided with a seal (SL3), wherein said seal comprises a multiple-lip seal.

The present invention provides an assembly according to the second aspect of the invention, wherein said multiple-lip seal comprises one or more leakage channels (10, 11, 12).

The present invention provides an assembly according to the second aspect of the invention, wherein at least one leakage channel (10) is arranged for returning petrol to said first fuel supply tank (1).

The present invention provides an assembly according to the second aspect of the invention, wherein at least one leakage channel (12) is arranged for returning liquefied vapour to said second fuel supply tank (2).

The present invention provides an assembly according to the second aspect of the invention, wherein at least one leakage channel (11) is arranged for returning petrol and/or liquefied vapour to a purge canister.

Another advantageous feature of the present invention lies in the methods available for the fuel change-over events. When changing from petrol fuel to the liquefied vapour fuel there is first of all no change in operation conditions for the petrol fuel high-pressure pump since it will continue to supply the petrol fuel under high pressure to the high-pressure part of the system. The invention provides for a media separated liquefied vapour high-pressure pump which accepts the petrol fuel under high pressure in a separated circuit (chambers A and B) as input and utilizes this to create the high pressure in the liquefied vapour fuel. Typically, the magnitude of the petrol fuel pressure is comparable to the magnitude of the pressure created in the liquefied vapour fuel. The change-over process from petrol to the liquefied vapour fuel therefore involves the redirecting of the fuel output flow from the petrol fuel high-pressure pump no longer to the injector rails but to the input port of the liquefied vapour high-pressure pump. Through a set of non-return valves and other logical and/or proportional components, the liquefied vapour output flow from the liquefied vapour high-pressure pump is fed into the high-pressure injector rail. Control algorithms running in the liquefied vapour high-pressure pump control unit will monitor the pressure available in the injector rail and adjust this pressure signal in such a way that the GDI engine's control unit will raise or lower the target value for the injection pressure in order to compensate for the differences in heating value and density between the petrol and the liquefied vapour fuel. The change-over event from the liquefied vapour fuel back to the petrol fuel involves the reversal of the process described above. The liquefied vapour flow to the liquefied vapour high-pressure pump is stopped and the petrol outlet flow from the petrol fuel high-pressure pump is now directed directly into the high-pressure rail.

According to the present invention, however, a number of additional features may be involved in the change-over process, such as measures for the evacuation of the high-pressure part of the GDI engine's fuel system. One of these features may be, during a liquefied vapour to petrol change-over event, the opening for a brief period of time of one or more solenoid or 3/2 valves, allowing for some of the pressurized liquefied vapour fuel, residing in the high-pressure part of the fuel system, to escape back to the liquefied vapour storage tank. This feature can be used to reduce the pressure difference across the petrol fuel high-pressure pump plunger seals and also across the injector tips, resulting in a reduced leakage rate. This lowering of the pressure inside the injector rail also promotes the influx of the pressurized petrol fuel into the same. This latter rush-in of petrol into the injector rail can be further assisted by directing some of the pressurized petrol which might be stored inside a petrol fuel accumulator, also incorporated into the conversion kit, towards the injector rail.

Still another aspect of the present invention is the feature of allowing an engine start using the petrol fuel, even when the engine was shut down whilst using the liquefied vapour fuel. After engine shut down, whilst the engine was running on the liquefied vapour fuel, the liquefied vapour high-pressure pump control unit is kept active, or is re-activated, at certain time intervals following the engine shut down event. Next, the control unit employs algorithms which, at predetermined time intervals, monitor the fuel pressure remaining inside the injector rail. If this pressure is found to be above a pre-determined threshold, one or more solenoid or 3/2 valves are opened for a brief period of time, effectively allowing a certain amount of the liquefied vapour fuel to expand from the injector rail and high-pressure lines and flow back to the liquefied vapour storage tank. This event is preferably repeated several times until the pressure residing inside the injector rail is below said predetermined threshold.

According to yet another preferred embodiment of the invention, a hydraulic accumulator storing a certain volume of high-pressure petrol fuel, can be incorporated into the conversion system in such a way that a portion of said accumulated petrol fuel can be released into the high-pressure lines and injector rail. The result of this series of events being a GDI engine's high-pressure system being completely filled with vapour-free petrol fuel ready to be cranked up at the driver's discretion.

The following is intended to further clarify the present invention, and are nowhere intended to limit the scope of the present invention. The invention will be described hereinafter by way of a preferred embodiment as shown in the drawings and more specifically with respect to a compact size passenger car which is converted for liquefied vapour, preferably liquefied petrol gas (LPG). However, it will be appreciated that the invention can likewise be applied to other types of vehicles and other types of alternative fuel such as dimethyl ether (DME).

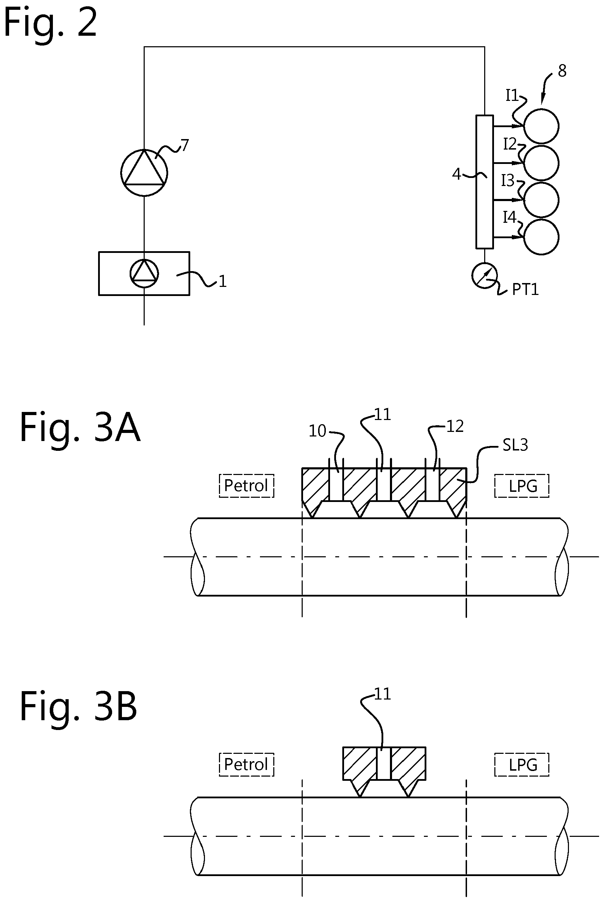

Referring to Fig. 1A, the fuel system of a GDI equipped compact size car converted to liquefied vapour along the lines of the present invention, is depicted. The petrol fuel (gasoline) is stored in fuel tank 1. The figure also depicts a return line into the petrol storage tank 1, this return line is not commonly found in state of the art GDI equipped vehicles, as is depicted in Fig. 2, but is vital to the operation of the liquefied vapour high-pressure pump 5. Therefore, when applying the system according to the invention to such a vehicle, a return line for the petrol rejected by the liquefied vapour high-pressure pump needs to be installed. Such storage tanks are commonly equipped with an in-tank fuel pump, capable of supplying sufficient pressure, typically in the range from 4 to 7 bars, to assure proper operation of the high-pressure pump (HPP) 7 in both Fig. 1A and Fig. 2. From the petrol fuel high-pressure pump 7 the pressurized petrol flows to the selector switch 3. The liquefied vapour is stored in a pressure vessel 2 conforming to all regulations and standards set forth for such vessels. All vessel accessories required by laws and regulations such as safety valves, shut off valves and the like are omitted from Fig. 1A for reasons of clarity but will be apparent to the skilled person. Preferably, said vessels not only show a fuel take-off line but also incorporate a fuel return line. Such being preferred to circulate the liquefied vapour fuel continuously in order to prevent vaporization inside the fuel lines. Shown here as a switch type of component but can obviously be materialized in many other forms such as a combination of two distinct solenoids, preferably as a 3/2 valve or as a sequence of two valves, the latter embodiments being more capable of preventing leakage.

This selector switch 3 has two positions, (P) when using the petrol, and (G) when using the liquefied vapour fuel. When using petrol, fuel flows directly from the petrol fuel high-pressure pump to injector rail 4, from which injectors I1, I2, I3 and I4 draw their fuel for direct injection into the combustion chambers of GDI engine 8. The injector rail 4 has a pressure transduce PT1 connected to it. The signal originating from PT1 is fed as input into both the OEM ECU as well as into the liquefied vapour high-pressure pump control unit 9. In a further advantageous embodiment of the present invention the petrol fuel and/or the liquefied vapour high-pressure pump control unit 9 is also hooked up to the vehicle's CAN bus in order to retrieve valuable information related to the current operating conditions of the GDI engine.

When running on liquefied vapour, the petrol pressurized by the petrol fuel high-pressure pump 7 is fed through either solenoid S1 or S2 into either chamber A or B of the liquefied vapour high-pressure pump 5. When petrol is admitted into chamber A, the result will be an increase in liquefied vapour pressure in chamber D, whereby the low-pressure liquefied vapour is allowed to enter into chambers C and D by means of the non-turn valves NR3 and NR4. Next, the pressurized liquefied vapour will exit from the liquefied vapour high-pressure pump 5 through non-return valve NR2 and flow into the injector rail 4. It will be clear to the skilled person that by choosing different diameters for the left and right-hand side pistons, any desired ratio of petrol to liquefied vapour pressure can be created.

In a preferred embodiment, the chambers A through D, the hydraulic components NR1 through NR4, 3/2 valves or solenoids S1 through S4, fuel selector 3 are all placed inside one housing. This allows to keep volumes of drillings, bores and lines as low as possible.

In the preferred embodiment shown in Fig. 1A, the design decision as to which fuel is allowed to enter into which chamber of the liquefied vapour high-pressure pump 5 is made in such a way that the two different fuels are separated from each other in the most rigorous manner possible. In the embodiment shown in Fig. 1A this is accomplished by only allowing identical fuels on the opposing side of the two large pistons. In this way there is only a minimal risk of materials incompatibility or other chemical effects giving rise to deterioration of the large diameter piston seals SL1 and SL2. Furthermore, should any leakage occur over either SL1 or SL2, there would still be no risk of the one fuel contaminating the other fuel. Said advantageous lay out of the liquefied vapour high-pressure pump 5 therefore renders the large piston seals SL1 and SL2 completely non-critical. Obviously, these favourable conditions do not exist for seal SL3. For this seal will have to endure petrol on the left-hand side and liquefied vapour fuel (i.e. LPG) on the right-hand side, continuously.

In a further advantageous embodiment, the effective areas of the pistons are chosen to be substantially equal and the fuel input pressures for petrol and liquefied vapour are also chosen to be substantially equal. The result of these choices will be creation of identical pressures on both sides of seal SL3. It will be clear to the skilled person that in this way the operating conditions for seal SL3 can be chosen to be the most favourable possible.

Yet another advantage of the embodiment shown in Fig. 1A is the fact the housing of seal SL3 is non-moving. This has the great advantage that leakage collecting passages LK1 in Fig. 1A and passages 10, 11 and 12 in FIG. 3A can easily be created inside the liquefied vapour high-pressure pump housing. Leaked petrol can then easily be led back to the petrol tank via the installed petrol return line and leaked liquefied vapour can be led back to the liquefied vapour tank via the liquefied vapour return line. Alternatively, the leaked fuel(s) could be collected and temporarily stored in the vehicle's purge canister. Fig. 3A depicts an advantageous embodiment for the seal SL3. Here a four-lip seal is shown with the leakage channels 10 for petrol, 11 for venting and/or monitoring and 12 for liquefied vapour fuel (i.e. LPG). Fig. 3B depicts an advantageous embodiment for the seal SL3, comprising solely one leakage channel 11 for venting of petrol and liquefied vapour fuel and/or monitoring. Fig. 3C depicts an advantageous embodiment for the seal SL3, comprising solely leakage channels 10 for petrol, and 12 for liquefied vapour fuel. Fig. 3D depicts an advantageous embodiment for the seal SL3, comprising leakage channels 10a and 10b for petrol, 11 for venting and/or monitoring and 12a and 12b for liquefied vapour fuel. This is advantageous for stepwise evacuation of fuel and for maintaining a sufficiently high under-pressure. Further additional leakage channels can be anticipated.

Solenoids or 3/2 valves S1 through S4 control the admission and rejection of petrol to and from chambers A and B. The liquefied vapour high-pressure pump control unit is performing this solenoid or 3/2 valve control. The momentary position of the pistons is therefore vital and in the preferred embodiment according to Fig. 1A, the liquefied vapour high-pressure pump is equipped with two linear sensors RC1 and RC2. Alternatively, Reed contacts may be employed.

When a piston approaches the physical end of its stroke, this is signalled to the control unit via said linear contact(s). Obviously, many other solutions can be envisaged for determining the correct moment for reversal of the direction of piston movement.

Next the fuel change-over event from liquefied vapour to petrol will be discussed. This change-over event can occur in two ways: firstly, by change-over request from the driver, pressing the change-over switch and secondly in a fully automated way after the vehicle has been stopped after the vehicle has been running on liquefied vapour. This latter event relates to an advantageous embodiment of the liquefied vapour high-pressure pump system whereby the aim is to have the vehicle starting in petrol mode.

Liquefied vapour to petrol fuel change-over after a driver request is a straight forward sequence of events in preferred embodiment of Fig. 1A. The liquefied vapour high-pressure pump control unit will, after registering the driver request, switch selector 3 from the (G) position to the (P) position, power down the solenoids or 3/2 valves S1 through S4, power down the liquefied vapour supply pump in the liquefied vapour tank 2. It will be noted that the exact timing of said sequence of events is not critical. Once the selector switch 3 has changed state to (P), the high-pressure petrol flows from the petrol fuel high-pressure pump via the selector switch 3 to the injector rail 4. It will be clear to the skilled person that immediately following the changing of state of selector switch 3, there will be mixture of petrol and liquefied vapour present in the injector rail 4. Since the petrol is under high-pressure, there is no risk of liquefied vapour evaporation inside the injector rail 4. Obviously, the result of this change-over event is that for some time after the change-over event (typically 10 to 60 seconds) a mixture of liquefied vapour and petrol will exist inside the injector rail 4. The liquefied vapour high-pressure pump control unit will need to make adjustments to the setting of the target injection pressure in order to compensate the time dependent changes in fuel density and heating value. In the preferred embodiment of Fig. 1A this is accomplished by intercepting the signal produced by the injector rail pressure sensor PT1 and manipulating this signal before it is send on its way to the OEM ECU (not shown in Fig. 1A).

Fuel change-over after the vehicle has been stopped and was running on liquefied vapour, can also be accomplished by the liquefied vapour high-pressure pump system. The inventors have found that many of the reported OBD related errors in the state of the art systems were originating from fuelling errors during cold cranking and warm-up. For this reason, it is preferred that the liquefied vapour high-pressure pump control unit remains active, or can be re-activated on one or more instances after the vehicle has been shut down. In an advantageous embodiment the following chain of events might occur. Some time after the engine has been shut down, the control unit 9 re-activates and reads the signal from the injector rail sensor PT1. A typical time lapse for this active moment is 20 to 200 minutes after engine shut down. If the value read is higher than a threshold value, solenoid S5 is opened for a short period of time, allowing some of the liquefied vapour trapped inside the injector rail 4 to boil-of and flow back to the liquefied vapour tank. Alternatively, said solenoid valve S5 is replaced by a 3/2 valve. After the solenoid S5 is closed again, new heat will soak into the remaining trapped liquefied vapour effectively raising its pressure again. After a predetermined period of time, typically several minutes, the control unit 9 will again evaluate the pressure sensor PT1 and solenoid S5 will again be opened briefly. This chain of events is continued until the reading from pressure sensor PT1 fall short of the predetermined threshold. At this point, the fuel selector switch 3 is changed from (G) to (P), the solenoid S6 is opened and petrol flows from the accumulator 6 into the injector rail 4. Alternatively, said solenoid valve S6 is replaced by a 3/2 valve. The system is now flushed with vapour-free petrol and is ready for the next upcoming cranking event. It will be clear to the skilled person that after the next engine start, the petrol accumulator 6 needs to be refilled with high-pressure petrol. In an advantageous embodiment as depicted in Fig. 1A this is accomplished by opening solenoid S6 while running on liquefied vapour, thereby allowing high-pressure petrol to slowly flow through restrictor R1 and into accumulator 6. To allow fast out-rush of petrol from the accumulator into the high pressure lines an injector rail, the restrictor R3 is bypassed by non-return valve NR5.

Next the change-over event from petrol to liquefied vapour will be discussed. In the preferred embodiment of Fig. 1A, the first action taken by control unit 9 after receiving a driver fuel change-over request is to start the liquefied vapour supply pump located inside the liquefied vapour fuel tank 2. Typically, this takes between 4 and 40 seconds. The effect of running the liquefied vapour supply pump is to flush liquefied vapour through all the fuel lines connecting the liquefied vapour tank 2 to the liquefied vapour high-pressure pump 5. Any vapour present in these lines will be flushed back into the liquefied vapour tank. Next, the state of the fuel selector switch 3 will be changed from (P) to (G). High-pressure petrol will now flow into the chamber A or B of the liquefied vapour high-pressure pump 5 and pistons inside 5 will start to move and compress the liquefied vapour in chambers C or D. In a further advantageous embodiment of the present invention, the control unit 9 will closely monitor the evolution of the injector rail 4 pressure during this change-over event. If any dips or other unwanted pressure signal evolution is noticed, the control unit 9 is configured to (i) either change back to petrol state temporarily or (ii) to briefly open solenoid S6 and release some of the high-pressure petrol stored in the accumulator 6 into the injector rail 4. To the skilled person it will immediately be clear that the inclusion of the accumulator 6 into the system brings with it numerous advantageous features. Yet another advantage of the preferred embodiment depicted in Fig. 1A is the system stability brought about by the accumulator and the accompanying software strategies inside the control unit 9. The inventor has found during the course of the development activities that the number of OBD related errors has been significantly reduced when compared to the state of the art conversion kits.

While these and other advantages will become more apparent in reference to the aforementioned description of the preferred embodiment of the invention, it will be appreciated that additional objects, features and advantages of the invention may take other forms without departing from the scope of the invention as defined in the appended claims.

## Claims

1. Fuel supply system for injecting a liquefied vapour, such as liquefied petroleum gas or dimethyl ether fuel, under high pressure into a combustion chamber (8) of a combustion engine, comprising:
(i) a first fuel supply tank (1) for a petrol fuel equipped with a supply pump;
(ii) a second fuel supply tank (2) for liquefied vapour equipped with a supply pump;
(iii)a petrol fuel high-pressure pump (7) downstream of the first fuel supply tank (1);
(iv)a liquefied vapour high-pressure pump (5) downstream of the second fuel supply tank (2);
(v) a fuel selector switch (3) between said petrol fuel high-pressure pump (7) and said liquefied vapour high-pressure pump (5) for operating the fuel supply system in a petrol feeding state (P) or in a liquefied vapour feeding state (G);
(vi)a high-pressure rail (4) downstream of said petrol fuel high-pressure pump (7) and downstream of said liquefied vapour high-pressure pump (5), with multiple injectors (I1, I2, I3, 14) for direct injection of fuel into the combustion chambers (8);
wherein said liquefied vapour high-pressure pump (5) is arranged for receiving high-pressurized petrol from said petrol fuel high-pressure pump (7) via said fuel selector switch (3) in two petrol chambers (A, B), and for receiving liquefied vapour from said second fuel supply tank (2) in two liquefied vapour chambers (C, D); and
wherein said liquefied vapour high-pressure pump (5) further comprises a piston for transmitting the pressure of petrol fuel in said petrol chambers (A, B) to the liquefied vapour fuel in said liquefied vapour chambers (C, D), wherein the piston rod of said piston is provided with a seal (SL3), wherein said seal comprises a multiple-lip seal, and wherein said multiple-lip seal comprises one or more, preferably one, two or three, leakage channels (10a, 10b, 11, 12a, 12b), at least one of said one or more leakage channels being arranged for returning petrol to said first fuel supply tank (1) and/or at least one of said one or more leakage channels being arranged for returning liquefied vapour to said second fuel supply tank (2) and/or at least one of said one or more leakage channels being arranged for returning petrol and/or liquefied vapour to a purge canister.

2. Fuel supply system according to claim 1, wherein at least one leakage channel (10) is arranged for returning petrol to said first fuel supply tank (1).

3. Fuel supply system according to claim 1 or 2, wherein at least one leakage channel (12) is arranged for returning liquefied vapour to said second fuel supply tank (2).

4. Fuel supply system according to claim 3, wherein at least one leakage channel (11) is arranged for returning petrol and/or liquefied vapour to a purge canister.

5. Fuel supply system according to any of claims 1 to 4, wherein said petrol chambers (A, B) are provided with feed valves (S1, S2) and exit valves (S3, S4), and wherein said feed valves (S1, S2) and said exit valves (S3, S4) are operated by a control unit (9), preferably wherein said feed valves (S1, S2) and said exit valves (S3, S4) are 3/2 valves.

6. Fuel supply system according to any of claims 1 to 5, wherein said injector rail (4) is provided with a pressure transduce (PT1), whereby said pressure transduce (PT1) is configured for communicating a signal to a control unit (9).

7. Fuel supply system according to any of claims 1 to 6, further comprising a liquefied vapour return line comprising a valve (S5) for returning liquefied vapour in said injector rail (4) to said second fuel supply tank (2) for liquefied vapour.

8. Fuel supply system according to any of claims 1 to 7, further comprising a petrol accumulator (6) between said fuel selector switch (3) and said petrol fuel high-pressure pump (7).

9. Fuel supply system according to claim 8, wherein said petrol accumulator (6) is provided with a valve (S6) for opening and closing fluid communication to said petrol accumulator (6) and wherein a non-return valve (NR6) is provided between said petrol accumulator (6) and said valve (S6).

10. Fuel supply system according to any of claims 1 to 9, further comprising a petrol return line for returning petrol fuel in said petrol chamber (A, B) via exit valves (S3, S4) to said first fuel supply tank (1) for petrol fuel.

11. Fuel supply system according to any of claims 1 to 10, further comprising a liquefied vapour return line for returning liquefied vapour fuel in said liquefied vapour chamber (C, D) to said second fuel supply tank (2) for liquefied vapour fuel.

12. Assembly mountable between (i) a first fuel supply tank (1) for a petrol fuel equipped with a supply pump, (iii) a petrol fuel high-pressure pump (7) downstream of the first fuel supply tank (1), and (vi) a high-pressure rail (4) downstream of said petrol fuel high-pressure pump (7), with multiple injectors (I1, I2, I3, I4) for direct injection of fuel into the combustion chambers (8), for injecting a liquefied vapour, such as liquefied petroleum gas or dimethyl ether fuel, under high pressure into a combustion chamber (8) of a combustion engine, said assembly comprising:
(ii) a second fuel supply tank (2) for liquefied vapour equipped with a supply pump;
(iv)a liquefied vapour high-pressure pump (5) connectable downstream of the second fuel supply tank (2) and upstream of said high-pressure rail (4);
(v) a fuel selector switch (3) connectable between said petrol fuel high-pressure pump (7) and said liquefied vapour high-pressure pump (5) for operating the fuel supply system in a petrol feeding state (P) or in a liquefied vapour feeding state (G);
wherein said liquefied vapour high-pressure pump (5) is provided with inlets for receiving high-pressurized petrol from said petrol fuel high-pressure pump (7) via said fuel selector switch (3) in two petrol chambers (A, B), and is provided with inlets for receiving liquefied vapour from said second fuel supply tank (2) in two liquefied vapour chambers (C, D); and
wherein said liquefied vapour high-pressure pump (5) further comprises a piston for transmitting the pressure of petrol fuel in said petrol chambers (A, B) to the liquefied vapour fuel in said liquefied vapour chambers (C, D), wherein the piston rod of said piston is provided with a seal (SL3), wherein said seal comprises a multiple-lip seal, wherein said multiple-lip seal comprises one or more, preferably one, two or three, leakage channels (10a, 10b, 11, 12a, 12b), at least one of said one or more leakage channels being arranged for returning petrol to said first fuel supply tank (1) and/or at least one of said one or more leakage channels being arranged for returning liquefied vapour to said second fuel supply tank (2) and/or at least one of said one or more leakage channels being arranged for returning petrol and/or liquefied vapour to a purge canister.

13. Assembly according to claim 12, wherein at least one leakage channel (10) is arranged for returning petrol to said first fuel supply tank (1).

14. Assembly according to claim 12 or 13, wherein at least one leakage channel (12) is arranged for returning liquefied vapour to said second fuel supply tank (2).

15. Assembly according to any of claims 12 to 14, wherein at least one leakage channel (11) is arranged for returning petrol and/or liquefied vapour to a purge canister.

## Patentansprüche

1. Brennstoffzufuhrsystem zum Einspritzen eines verflüssigten Dampfs, wie beispielsweise Flüssiggas oder Dimethyletherbrennstoff, unter Hochdruck in eine Brennkammer (8) eines Verbrennungsmotors, umfassend:
(I) einen ersten Brennstoffzufuhrtank (1) für einen Benzinbrennstoff, der mit einer Zufuhrpumpe ausgestattet ist,
(II) einen zweiten Brennstoffzufuhrtank (2) für verflüssigten Dampf, der mit einer Zufuhrpumpe ausgestattet ist,
(III) eine Benzinbrennstoff-Hochdruckpumpe (7) prozessabwärts des ersten Brennstoffzufuhrtanks (1),
(IV) eine Hochdruckpumpe (5) für verflüssigten Dampf prozessabwärts des zweiten Brennstoffzufuhrtanks (2),
(V) einen Brennstoffauswahlschalter (3) zwischen der Benzinbrennstoff-Hochdruckpumpe (7) und der Hochdruckpumpe (5) für verflüssigten Dampf, um das Brennstoffzufuhrsystem in einem Benzinzufuhrzustand (P) oder in einem Zustand (G) der Zufuhr verflüssigten Dampfs zu betreiben;
(VI) eine Hochdruckleiste (4) prozessabwärts der Benzinbrennstoff-Hochdruckpumpe (7) und prozessabwärts der Hochdruckpumpe (5) für verflüssigten Dampf, mit mehreren Einspritzdüsen (I1, I2, I3, I4) für eine Direkteinspritzung von Brennstoff in die Brennkammern (8);
wobei die Hochdruckpumpe (5) für verflüssigten Dampf dafür angeordnet ist, über den Brennstoffauswahlschalter (3) in zwei Benzinkammern (A, B) mit Hochdruck beaufschlagtes Benzin von der Benzinbrennstoff-Hochdruckpumpe (7) zu empfangen, und in zwei Kammern (C, D) für verflüssigten Dampf verflüssigten Dampf von dem zweiten Brennstoffzufuhrtank (2) zu empfangen; und
wobei die Hochdruckpumpe (5) für verflüssigten Dampf ferner einen Kolben zum Übertragen des Drucks von Benzinbrennstoff in den Benzinkammern (A, B) auf den verflüssigten Dampfbrennstoff in den Kammern (C, D) für verflüssigten Dampf umfasst, wobei die Kolbenstange des Kolbens mit einer Dichtung (SL3) versehen ist, wobei die Dichtung eine mehrlippige Dichtung umfasst und wobei die mehrlippige Dichtung einen oder mehrere, vorzugsweise einen, zwei oder drei, Leckagekanäle (10a, 10b, 11, 12a, 12b) umfasst, wobei mindestens einer des einen oder der mehreren Leckagekanäle dafür angeordnet ist, Benzin zu dem ersten Brennstoffzufuhrtank (1) zurückzuführen und/oder mindestens einer des einen oder der mehreren Leckagekanäle dafür angeordnet ist, verflüssigten Dampf zu dem zweiten Brennstoffzufuhrtank (2) zurückzuführen und/oder mindestens einer des einen oder der mehreren Leckagekanäle dafür angeordnet ist, Benzin und/oder verflüssigten Dampf zu einem Reinigungskanister zurückzuführen.

2. Brennstoffzufuhrsystem nach Anspruch 1, wobei mindestens ein Leckagekanäl (10) dafür angeordnet ist, Benzin zu dem ersten Brennstoffzufuhrtank (1) zurückzuführen.

3. Brennstoffzufuhrsystem nach Anspruch 1 oder 2, wobei mindestens ein Leckagekanäl (12) dafür angeordnet ist, verflüssigten Dampf zu dem zweiten Brennstoffzufuhrtank (2) zurückzuführen.

4. Brennstoffzufuhrsystem nach Anspruch 3, wobei mindestens ein Leckagekanäl (11) dafür angeordnet ist, Benzin und/oder verflüssigten Dampf zu einem Reinigungskanister zurückzuführen.

5. Brennstoffzufuhrsystem nach einem der Ansprüche 1 bis 4, wobei die Benzinkammern (A, B) mit Zufuhrventilen (S1, S2) und Auslassventilen (S3, S4) versehen sind und wobei die Zufuhrventile (S1, S2) und die Auslassventile (S3, S4) von einer Steuereinheit (9) betrieben werden, wobei die Zufuhrventile (S1, S2) und die Auslassventile (S3, S4) vorzugsweise 3/2-Wegeventile sind.

6. Brennstoffzufuhrsystem nach einem der Ansprüche 1 bis 5, wobei die Einspritzleiste (4) mit einem Druckaufnehmer (PT1) versehen ist, wobei der Druckaufnehmer (PT1) dafür gestaltet ist, ein Signal an eine Steuereinheit (9) zu übermitteln.

7. Brennstoffzufuhrsystem nach einem der Ansprüche 1 bis 6, ferner eine Rückführungsleitung für verflüssigten Dampf umfassend, die ein Ventil (S5) zum Zurückführen verflüssigten Dampfs in der Einspritzleiste (4) zu dem zweiten Brennstoffzufuhrtank (2) für verflüssigten Dampf umfasst.

8. Brennstoffzufuhrsystem nach einem der Ansprüche 1 bis 7, ferner einen Benzinakkumulator (6) zwischen dem Brennstoffauswahlschalter (3) und der Benzinbrennstoff-Hochdruckpumpe (7) umfassend.

9. Brennstoffzufuhrsystem nach Anspruch 8, wobei der Benzinakkumulator (6) mit einem Ventil (S6) zum Öffnen und Schließen der Fluidverbindung zu dem Benzinakkumulator (6) versehen ist und wobei zwischen dem Benzinakkumulator (6) und dem Ventil (S6) ein Rückschlagventil (NR6) bereitgestellt ist.

10. Brennstoffzufuhrsystem nach einem der Ansprüche 1 bis 9, ferner eine Benzinrückführungsleitung zum Rückführen von Benzinbrennstoff in der Benzinkammer (A, B) über Auslassventile (S3, S4) zu dem ersten Brennstoffzufuhrtank (1) für Benzinbrennstoff umfassend.

11. Brennstoffzufuhrsystem nach einem der Ansprüche 1 bis 10, ferner eine Rückführungsleitung für verflüssigten Dampf zum Rückführen verflüssigten Dampfbrennstoffs in der Kammer (C, D) für verflüssigten Dampf zu dem zweiten Brennstoffzufuhrtank (2) für verflüssigten Dampfbrennstoff umfassend.

12. Anordnung, montierbar zwischen (I) einem ersten Brennstoffzufuhrtank (1) für Benzinbrennstoff, ausgestattet mit einer Zufuhrpumpe, (III) einer Benzinbrennstoff-Hochdruckpumpe (7) prozessabwärts des ersten Brennstoffzufuhrtanks (1) und (VI) einer Hochdruckleiste (4) prozessabwärts der Benzinbrennstoff-Hochdruckpumpe (7), mit mehreren Einspritzdüsen (I1, I2, I3, I4) für eine Direkteinspritzung von Brennstoff in die Brennkammern (8), zum Einspritzen verflüssigten Dampfs, wie beispielsweise Flüssiggas oder Dimethyletherbrennstoff, unter Hochdruck in eine Brennkammer (8) eines Verbrennungsmotors, wobei die Anordnung Folgendes umfasst:
(II) einen zweiten Brennstoffzufuhrtank (2) für verflüssigten Dampf, der mit einer Zufuhrpumpe ausgestattet ist,
(IV) eine Hochdruckpumpe (5) für verflüssigten Dampf, die prozessabwärts des zweiten Brennstoffzufuhrtanks (2) und prozessaufwärts der Hochdruckleiste (4) angeschlossen werden kann;
(V) einen Brennstoffauswahlschalter (3), der zwischen der Benzinbrennstoff-Hochdruckpumpe (7) und der Hochdruckpumpe (5) für verflüssigten Dampf angeschlossen werden kann, um das Brennstoffzufuhrsystem in einem Benzinzufuhrzustand (P) oder in einem Zustand (G) der Zufuhr verflüssigten Dampfs zu betreiben,
wobei die Hochdruckpumpe (5) für verflüssigten Dampf mit Einlässen zur Aufnahme von mit Hochdruck beaufschlagtem Benzin von der Benzinbrennstoff-Hochdruckpumpe (7) über den Brennstoffauswahlschalter (3) in zwei Benzinkammern (A, B) versehen ist, und mit Einlässen zur Aufnahme verflüssigten Dampfs von dem zweiten Brennstoffzufuhrtank (2) in zwei Kammern (C, D) für verflüssigten Dampf versehen ist; und
wobei die Hochdruckpumpe (5) für verflüssigten Dampf ferner einen Kolben zum Übertragen des Drucks von Benzinbrennstoff in den Benzinkammern (A, B) auf den verflüssigten Dampfbrennstoff in den Kammern (C, D) für verflüssigten Dampf umfasst, wobei die Kolbenstange des Kolbens mit einer Dichtung (SL3) versehen ist, wobei die Dichtung eine mehrlippige Dichtung umfasst, wobei die mehrlippige Dichtung einen oder mehrere, vorzugsweise einen, zwei oder drei, Leckagekanäle (10a, 10b, 11, 12a, 12b) umfasst, mindestens einer des einen oder der mehreren Leckagekanäle dafür angeordnet ist, Benzin zu dem ersten Brennstoffzufuhrtank (1) zurückzuführen, und/oder mindestens einer des einen oder der mehreren Leckagekanäle dafür angeordnet ist, verflüssigten Dampf zu dem zweiten Brennstoffzufuhrtank (2) zurückzuführen und/oder mindestens einer des einen oder der mehreren Leckagekanäle dafür angeordnet ist, Benzin und/oder verflüssigten Dampf zu einem Reinigungskanister zurückzuführen.

13. Anordnung nach Anspruch 12, wobei mindestens ein Leckagekanäl (10) dafür angeordnet ist, Benzin zu dem ersten Brennstoffzufuhrtank (1) zurückzuführen.

14. Anordnung nach Anspruch 12 oder 13, wobei mindestens ein Leckagekanäl (12) dafür angeordnet ist, verflüssigten Dampf zu dem zweiten Brennstoffzufuhrtank (2) zurückzuführen.

15. Anordnung nach einem der Ansprüche 12 bis 14, wobei mindestens ein Leckagekanäl (11) dafür angeordnet ist, Benzin und/oder verflüssigten Dampf zu einem Reinigungskanister zurückzuführen.

## Revendications

1. Système d'alimentation en carburant pour injecter une vapeur liquéfiée, telle que du gaz de pétrole liquéfié ou du carburant éther diméthylique, sous haute pression dans une chambre de combustion (8) d'un moteur à combustion, comprenant :
(i) un premier réservoir d'alimentation en carburant (1) pour un carburant essence équipé d'une pompe d'alimentation;
(ii) un second réservoir d'alimentation en carburant (2) pour de la vapeur liquéfiée équipé d'une pompe d'alimentation;
(iii)une pompe haute pression de carburant essence (7) en aval du premier réservoir d'alimentation en carburant (1);
(iv)une pompe haute pression de vapeur liquéfiée (5) en aval du second réservoir d'alimentation en carburant (2) ;
(v) un commutateur de sélection de carburant (3) entre ladite pompe haute pression de carburant essence (7) et ladite pompe haute pression de vapeur liquéfiée (5) pour faire fonctionner le système d'alimentation en carburant dans un état d'alimentation en essence (P) ou dans un état d'alimentation en vapeur liquéfiée (G) ;
(vi)une rampe haute pression (4) en aval de ladite pompe haute pression de carburant essence (7) et en aval de ladite pompe haute pression de vapeur liquéfiée (5), avec de multiples injecteurs (I1, I2, I3, I4) pour l'injection directe de carburant dans les chambres de combustion (8) ;
dans lequel ladite pompe haute pression de vapeur liquéfiée (5) est agencée pour recevoir de l'essence sous haute pression partir de ladite pompe haute pression de carburant essence (7) via ledit sélecteur de carburant (3) dans deux chambres à essence (A, B), et pour recevoir de la vapeur liquéfiée à partir dudit second réservoir d'alimentation en carburant (2) dans deux chambres à vapeur liquéfiée (C, D) ; et
dans lequel ladite pompe haute pression de vapeur liquéfiée (5) comprend en outre un piston pour transmettre la pression du carburant essence dans lesdites chambres à essence (A, B) au carburant vapeur liquéfiée dans lesdites chambres à vapeur liquéfiée (C, D), dans lequel la tige dudit piston est munie d'un joint (SL3), dans lequel ledit joint comprend un joint à lèvres multiples, et dans lequel ledit joint à lèvres multiples comprend un ou plusieurs, de préférence un, deux ou trois, canaux de fuite (10a, 10b, 11, 12a, 12b), au moins un desdits un ou plusieurs canaux de fuite étant agencé pour renvoyer l'essence vers ledit premier réservoir d'alimentation en carburant (1) et/ou au moins un desdits un ou plusieurs canaux de fuite étant agencé pour renvoyer la vapeur liquéfiée vers ledit second réservoir d'alimentation en carburant (2) et/ou au moins un desdits un ou plusieurs canaux de fuite étant agencé pour renvoyer l'essence et/ou la vapeur liquéfiée vers un bidon de purge.

2. Système d'alimentation en carburant selon la revendication 1, dans lequel au moins un canal de fuite (10) est agencé pour renvoyer l'essence vers ledit premier réservoir d'alimentation en carburant (1).

3. Système d'alimentation en carburant selon la revendication 1 ou 2, dans lequel au moins un canal de fuite (12) est agencé pour renvoyer la vapeur liquéfiée vers ledit second réservoir d'alimentation en carburant (2).

4. Système d'alimentation en carburant selon la revendication 3, dans lequel au moins un canal de fuite (11) est agencé pour renvoyer l'essence et/ou la vapeur liquéfiée vers un bidon de purge.

5. Système d'alimentation en carburant selon l'une quelconque des revendications 1 à 4, dans lequel lesdites chambres à essence (A, B) sont munies de vanne d'alimentation (S1, S2) et de vannes de sortie (S3, S4), et dans lequel lesdites vannes d'alimentation (S1, S2) et lesdites vannes de sortie (S3, S4) sont actionnées par une unité de commande (9), de préférence dans lequel lesdites vannes d'alimentation (S1, S2) et lesdites vannes de sortie (S3, S4) sont des vannes 3/2.

6. Système d'alimentation en carburant selon l'une quelconque des revendications 1 à 5, dans lequel ladite rampe d'injection (4) est munie d'un transducteur de pression (PT1), ledit transducteur de pression (PT1) étant configuré pour communiquer un signal à une unité de commande (9).

7. Système d'alimentation en carburant selon l'une quelconque des revendications 1 à 6, comprenant en outre conduite de retour de vapeur liquéfiée comprenant une vanne (S5) pour renvoyer la vapeur liquéfiée dans ladite rampe d'injection (4) vers ledit second réservoir d'alimentation en carburant (2) pour la vapeur liquéfiée.

8. Système d'alimentation en carburant selon l'une quelconque des revendications 1 à 7, comprenant en outre un accumulateur d'essence (6) entre ledit commutateur de sélection de carburant (3) et ladite pompe haute pression de carburant essence (7).

9. Système d'alimentation en carburant selon la revendication 8, dans lequel ledit accumulateur d'essence (6) est muni d'une vanne (S6) pour ouvrir et fermer la communication de fluide dudit accumulateur d'essence (6) et dans lequel une vanne de retenue (NR6) est prévue entre ledit accumulateur d'essence (6) et ladite vanne (S6).

10. Système d'alimentation en carburant selon l'une quelconque des revendications 1 à 9, comprenant en outre une conduite de retour d'essence pour renvoyer le carburant essence dans ladite chambre à essence (A, B) via des vannes de sortie (S3, S4) vers ledit premier réservoir d'alimentation en carburant (1) pour le carburant essence.

11. Système d'alimentation en carburant selon l'une quelconque des revendications 1 à 10, comprenant en outre une conduite de retour de vapeur liquéfiée pour renvoyer le carburant vapeur liquéfiée dans ladite chambre à vapeur liquéfiée (C, D) vers ledit second réservoir d'alimentation en carburant (2) pour le carburant vapeur liquéfiée.

12. Ensemble pouvant être monté entre (i) un premier réservoir d'alimentation en carburant (1) pour un carburant essence équipé d'une pompe d'alimentation, (iii) une pompe haute pression de carburant essence (7) en aval du premier réservoir d'alimentation en carburant (1), et (vi) une rampe haute pression (4) en aval de ladite pompe haute pression de carburant essence (7), avec de multiples injecteurs (I1, I2, I3, I4) pour l'injection directe de carburant dans les chambres de combustion (8), pour injecter une vapeur liquéfiée, telle que du gaz de pétrole liquéfié ou du carburant éther diméthylique, sous haute pression dans une chambre de combustion (8) d'un moteur à combustion, ledit ensemble comprenant :
(ii) un second réservoir d'alimentation en carburant (2) pour de la vapeur liquéfiée équipé d'une pompe d'alimentation ;
(iv)une pompe haute pression de vapeur liquéfiée (5) pouvant être connectée en aval du second réservoir d'alimentation en carburant (2) et en amont de ladite rampe haute pression (4) ;
(v) un commutateur de sélection de carburant (3) pouvant être connecté entre ladite pompe haute pression de carburant essence (7) et ladite pompe haute pression de vapeur liquéfiée (5) pour faire fonctionner le système d'alimentation en carburant dans un état d'alimentation en essence (P) ou dans un état d'alimentation en vapeur liquéfiée (G) ;
dans lequel ladite pompe haute pression de vapeur liquéfiée (5) est munie d'entrées pour recevoir de l'essence sous haute pression à partir de ladite pompe haute pression de carburant d'essence (7) via ledit commutateur de sélection de carburant (3) dans deux chambres à essence (A, B), et est munie d'entrées pour recevoir de la vapeur liquéfiée à partir dudit second réservoir d'alimentation en carburant (2) dans deux chambres à vapeur liquéfiée (C, D) ; et
dans lequel ladite pompe haute pression de vapeur liquéfiée (5) comprend en outre un piston pour transmettre la pression du carburant essence dans lesdites chambres à essence (A, B) au carburant vapeur liquéfiée dans lesdites chambres à vapeur liquéfiée (C, D), dans lequel la tige dudit piston est munie d'un joint (SL3), dans lequel ledit joint comprend un joint à lèvres multiples, dans lequel ledit joint à lèvres multiples comprend un ou plusieurs, de préférence un, deux ou trois, canaux de fuite (10a, 10b, 11, 12a, 12b), au moins un desdits un ou plusieurs canaux de fuite étant agencé pour renvoyer l'essence vers ledit premier réservoir d'alimentation en carburant (1) et/ou au moins un desdits un ou plusieurs canaux de fuite étant agencé pour renvoyer la vapeur liquéfiée vers ledit second réservoir d'alimentation en carburant (2) et/ou au moins un desdits un ou plusieurs canaux de fuite étant agencé pour renvoyer l'essence et/ou la vapeur liquéfiée vers un bidon de purge.

13. Ensemble selon la revendication 12, dans lequel au moins un canal de fuite (10) est agencé pour renvoyer l'essence vers ledit premier réservoir d'alimentation en carburant (1).

14. Ensemble selon la revendication 12 ou 13, dans lequel au moins un canal de fuite (12) est agencé pour renvoyer la vapeur liquéfiée vers ledit second réservoir d'alimentation en carburant (2).

15. Ensemble selon l'une quelconque des revendications 12 à 14, dans lequel au moins un canal de fuite (11) est agencé pour renvoyer l'essence et/ou la vapeur liquéfiée vers un bidon de purge.
